# EUROPEAN PATENT SPECIFICATION

(11) **EP 1 679 356 B1**
(45) Date of publication and mention of the grant of the patent: **16.04.2008**
(21) Application number: 05113071.4
(22) Date of filing: 29.12.2005
(51) Int. Cl.: C09J 7/02

(54) **Adhesive tape and substrate for adhesive tape**
Klebeband und Substrat für ein Klebeband
Ruban adhésif et support pour ruban adhésif

(30) Priority: 11.01.2005 JP 2005004534
(43) Date of publication of application: 12.07.2006
(73) Proprietor: NITTO DENKO CORPORATION, Ibaraki-shi, Osaka 567-8680 (JP)
(72) Inventor: Ishiguro, Shigeki, Ibaraki-shi, 567-8680, Osaka (JP); Nakagawa, Yoshio, Ibaraki-shi, 567-8680, Osaka (JP); Shirai, Masato, Ibaraki-shi, 567-8680, Osaka (JP)
(74) Representative: Weber, Thomas

(56) References cited:
- WO-A-97/05206
- PATENT ABSTRACTS OF JAPAN vol. 2003, no. 12, 5 December 2003 (2003-12-05) & JP 2004 115714 A (FUJIKURA LTD), 15 April 2004 (2004-04-15)
- PATENT ABSTRACTS OF JAPAN vol. 016, no. 249 (C-0948), 8 June 1992 (1992-06-08) & JP 04 057872 A (BANDO CHEM IND LTD), 25 February 1992 (1992-02-25)

## Description

### TECHNICAL FIELD OF THE INVENTION

The present invention relates to an adhesive tape and a substrate for an adhesive tape, which is used for said adhesive tape.

### BACKGROUND OF THE INVENTION

Conventionally, for electric insulation and binding use, adhesive tapes comprising a soft polyvinyl chloride (PVC) film as a substrate for adhesive tape (hereinafter to be referred to as "PVC tape") have been generally used. PVC tapes are highly flexible (i.e., low initial elastic modulus) and show fine followability to irregularities in connection parts when, for example, used for insulation treatment of connection parts of electric cables. When used for binding several electric cables and the like, the tape needs to be wound tight to secure electric cables, and is often wound while stretching approximately 100%. Since the slope of strength relative to elongation is steep in a range near 100% elongation, PVC tapes show high tightening power. In addition, since PVC tapes show high strength at break, they do not break even when tightly wound. However, many of the materials used for soft PVC films are suspected to be environmentally burdening. For example, PVC has been reported to possibly generate dioxin during incineration at low temperature. During combustion, moreover, PVC produces a large amount of toxic hydrogen chloride gas and carbon monoxide. Furthermore, some of the plasticizers added to impart flexibility have been reported to be suspected endocrine disrupters. In addition, lead and cadmium compounds may be used as stabilizers, and the both may cause some adverse influence on the human body.

Under the circumstances, a number of substitutes for a substrate for adhesive tape have been studied, which use a relatively soft olefin polymer instead of soft PVC (JP-A-2003-178628). However, since olefin polymers generally contain a crystal component, a yield point exists near 50% elongation, where the strength once decreases, in an elongation test. The presence of a yield point makes stable winding unattainable and decreases the binding force after winding. Consequently, olefin polymers are unsuitable for binding use. Moreover, olefin polymers generally show higher strength at break, and high elongation. As a result, in the use where what is called hand-cuttability (cutting tape with hands without using a cutting tool) is required after use of an adhesive tape, the broken-out section becomes completely stretched after cutting, which is inconvenient for a terminal treatment. Therefore, an adhesive tape comprising an olefin polymer as a substrate for adhesive tape cannot meet the bindability and hand-cuttability characteristic of PVC tapes, and particularly, due to the presence of a yield point, such adhesive tape is fatal as a substitute for a PVC tape.

With the purpose of improving the flexibility and hand-cuttability, an adhesive tape having a substrate made of a resin composition comprising a polyolefin polymer and a metal hydroxide treated with a silane coupling agent has been proposed (JP-A-2004-115714). While the adhesive tape described in JP-A-2004-115714 could eliminate the yield point, as compared to PVC tape, there is a room for improvement in the elastic deformation at near 100% elongation and strength at break. When an inorganometallic compound contained a (heavy) metallic ion as impurity, moreover, the life of heat resistance was sometimes shortened.

### SUMMARY OF THE INVENTION

The present invention has been made in view of such situation, and aims at provision of an adhesive tape free of a yield point in a tensile test and having high strength, bindability, hand-cuttability and long-term heat resistance comparable to those of a PVC tape, even if it comprises an olefin polymer as a polymer component constituting the substrate for adhesive tape, as well as a substrate for adhesive tape, which is to be used for the adhesive tape.

The present inventors have conducted intensive studies in an attempt to solve the above-mentioned problems and found that an adhesive tape free of a yield point and having flexibility, high strength at break, hand-cuttability and long-term heat resistance, which is suitable for binding use, can be obtained by using, as a polymer component, an olefin polymer having a carbonylic oxygen atom in a molecular skeleton, which is combined with an inorganometallic compound treated with a silane coupling agent and a salicylic acid compound, and mixing given amounts thereof to form a substrate for adhesive tape, which resulted in the completion of the present invention.

Accordingly, the present invention is characterized by the following.
(1) An adhesive tape comprising an adhesive layer on at least one surface of a substrate, wherein the aforementioned substrate comprises at least an olefin polymer having a carbonylic oxygen atom in a molecular skeleton, an inorganometallic compound surface-treated with a silane coupling agent, and a salicylic acid compound,
   wherein
   the content of the aforementioned olefin polymer is 10-60 % by weight relative to the whole weight of the polymer components constituting the aforementioned substrate,
   the content of the aforementioned inorganometallic compound surface-treated with a silane coupling agent is 10-200 parts by weight relative to 100 parts by weight of the polymer components constituting the aforementioned substrate, and
   the content of the aforementioned salicylic acid compound is 0.05-10.0 parts by weight relative to 100 parts by weight of the polymer components constituting the aforementioned substrate.
(2) The adhesive tape of the above-mentioned (1), wherein the aforementioned substrate is free of a crosslinking treatment with ionizing radiation and/or a crosslinking agent.
(3) The adhesive tape of the above-mentioned (1) or (2), wherein the heat deformation rate of the adhesive tape at 100°C is not more than 65%.
(4) A substrate for an adhesive tape, which comprises at least an olefin polymer having a carbonylic oxygen atom in a molecular skeleton, an inorganometallic compound surface-treated with a silane coupling agent, and a salicylic acid compound,
   wherein
   the content of the aforementioned olefin polymer is 10-60 % by weight relative to the whole weight of the polymer components constituting the substrate,
   the content of the aforementioned inorganometallic compound surface-treated with a silane coupling agent is 10-200 parts by weight relative to 100 parts by weight of the polymer components constituting the substrate, and
   the content of the aforementioned salicylic acid compound is 0.05-10.0 parts by weight relative to 100 parts by weight of the polymer components constituting the substrate.
(5) The substrate of the above-mentioned (4), which is free of a crosslinking treatment with ionizing radiation and/or a crosslinking agent.

### BRIEF DESCRIPTION OF THE DRAWINGS

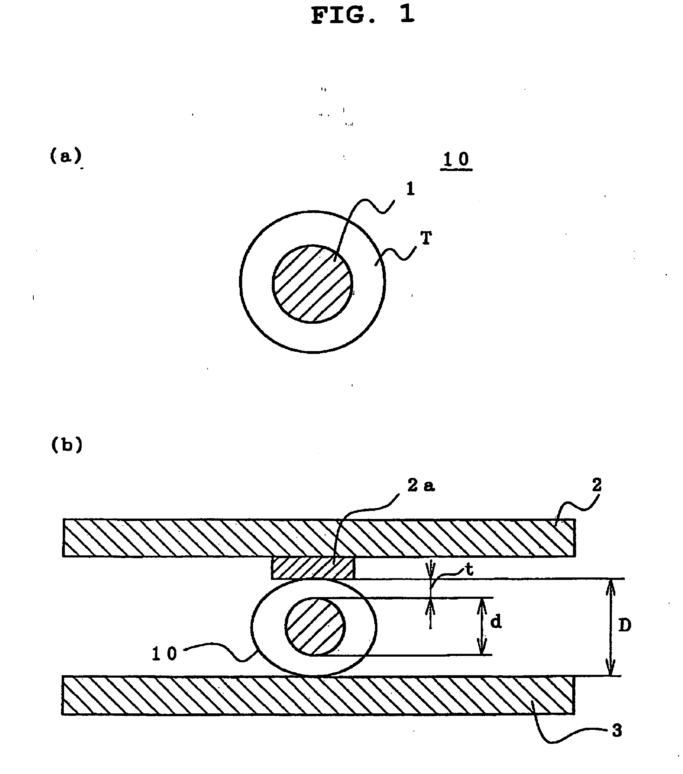

Fig. 1 explains the method of a heat deformation rate evaluation test of an adhesive tape, wherein Fig. 1(a) is a side view of the test form and Fig. 1(b) is a side view of the test device. In the Figure, each symbol means the following.
1 round rod, 2 pressure board, 3 parallel board, 10 test form, T adhesive tape

### EFFECT OF THE INVENTION

According to the present invention, an adhesive tape free of a yield point in a tensile test, which has high strength, and bindability, hand-cuttability and long-term heat resistance comparable to those of PVC tape, and a substrate for adhesive tape to be used for said adhesive tape can be provided. The adhesive tape of the present invention is useful for binding use.

### BEST MODE FOR CARRYING OUT THE INVENTION

The present invention is explained in detail in the following by referring to a preferable embodiment.

In the adhesive tape of the present invention, the substrate comprises a given amount each of an olefin polymer having a carbonylic oxygen atom in a molecular skeleton, an inorganometallic compound surface-treated with a silane coupling agent and a salicylic acid compound as essential components. By adopting the above-mentioned constitution, the adhesive tape of the present invention is free of a yield point, and has flexibility, bindability and hand-cuttability comparable to those of a PVC tape. These characteristics are expressed by numeral values as follows based on the initial elastic modulus, strength at break and elongation at break in a tensile test as indices.

The initial elastic modulus in a tensile test corresponds to the flexibility of adhesive tape. The initial elastic modulus of the adhesive tape of the present invention is 10-150 MPa, preferably 30-140 MPa, more preferably 50-130 MPa. When it is lower than 10 MPa, an adhesive tape tends to be easily stretched and deformed during rewinding. When it is greater than 150 MPa, the followability to the irregularities tends to be degraded.

To achieve the bindability, the absence of a yield point and high strength at break are required. The presence or absence of a yield point can be determined by plotting a graph of the output data of a tensile test. The evaluation of the absence of a yield point requires, as essential conditions, no decrease in the strength and constant increase in the strength with increasing stretchability in the graph. The strength at break of the adhesive tape of the present invention is 6-30 MPa, preferably 8-27 MPa, more preferably 10-24 MPa. When it is lower than 6 MPa, the adhesive tape may be broken during winding. When it is greater than 30 MPa, the winding operation requires highly strong force, and the adhesive tape tends to resist cutting with hands after the completion of the operation.

To achieve the hand-cuttability, suitable elongation is necessary. The elongation at break of the adhesive tape of the present invention is 80-600%, preferably 100-450%, more preferably 120-350%. When it is lower than 80%, the adhesive tape may be easily broken during winding. When it is greater than 600%, the adhesive tape stretches too much when cutting the tape after the completion of winding, and the broken-out section becomes degraded, which tends to result in lower adhesiveness of the terminal.

Here, the initial elastic modulus, strength at break and elongation at break are measured by stretching a test piece taken from an adhesive tape, under an atmosphere of 23°C, 50% RH (relative humidity) using a tensile tester defined in JIS B 7721 or an equivalent tensile tester at distance between chucks 50 mm and tensile rate 300 mm/min.

PVC used for PVC tapes is a non-crystalline polymer, but shows high interaction between molecules. While the plasticizing temperature varies depending on the molecular weight and the amount of plasticizer added, it is generally about 120°C. Therefore, the shape can be sufficiently maintained even at 100°C. PVC tapes are often used under high temperature conditions for connection of electric cables, binding in electric equipment, binding of electric cables near automobile engines and the like. Therefore, as a function of an adhesive tape, shape retention under the conditions of high temperature is highly important. To confirm the shape retention ability, a rather severe condition of 100°C was employed from the conventionally employed temperature conditions, and a heat deformation test was performed according to UL510 standard. The adhesive tape of the present invention shows a heat deformation rate at 100°C of not more than 65%, preferably not more than 50%, more preferably not more than 40%. Consequently, the adhesive tape of the present invention shows fine shape retention under the condition of 100°C during use.

The constituting materials of the adhesive tape of the present invention are explained in the following.

The substrate for the adhesive tape of the present invention is explained first. The substrate for the adhesive tape of the present invention comprises an olefin polymer having, as a polymer component, carbonylic oxygen atom (oxygen atom ascribed to carbonyl group) in a molecular skeleton. The olefin polymer is a component for mainly imparting an adhesive tape with flexibility and stretchability. When combined with an inorganometallic compound surface-treated with a silane coupling agent, the olefin polymer provides a strong interface binding force, improves mechanical properties of the substrate for adhesive tape, eliminates a yield point in a tensile test, and provides suitable elongation and strength (elongation and strength capable of imparting an adhesive tape with fine winding workability and hand-cuttability).

As the olefin polymer, a soft polyolefin resin having a carbonylic oxygen atom in a molecular skeleton is preferably used. As the soft polyolefin resin, an ethylene copolymer using a vinyl ester compound and/or α,β-unsaturated carboxylic acid or a derivative thereof as a comonomer, or a metal salt (ionomer) thereof and the like can be mentioned, which generally have a melting point of not more than 100°C. In the present invention, the melting point refers to a value measured with a differential scanning calorimeter (DSC).

As the vinyl ester compound in the above-mentioned ethylene copolymer and a metal salt (ionomer) thereof, for example, saturated carboxylate of vinyl alcohol such as vinyl acetate and the like can be mentioned. As the α,β-unsaturated carboxylic acid or a derivative thereof, for example, unsaturated carboxylic acids and anhydrides thereof, such as acrylic acid, methacrylic acid, maleic acid, fumaric acid, maleic anhydride, itaconic anhydride and the like; unsaturated carboxylates such as methyl acrylate, methyl methacrylate, ethyl acrylate, ethyl methacrylate, propyl acrylate, propyl methacrylate, isopropyl acrylate, isopropyl methacrylate, n-butyl acrylate, n-butyl methacrylate, cyclohexyl acrylate, cyclohexyl methacrylate, stearyl acrylate, stearyl methacrylate, lauryl acrylate, lauryl methacrylate, monomethyl maleate, monoethyl maleate, diethyl maleate, monomethyl fumarate, glycidyl acrylate, glycidyl methacrylate and the like; and the like can be mentioned. Of these, alkyl (meth)acrylates are preferable, and ethyl acrylate is particularly preferable.

Specific preferable examples of ethylene copolymer or a metal salt (ionomer) thereof include ethylene-acrylic acid copolymer, ethylene-methacrylic acid copolymer, ethylene-ethyl acrylate copolymer, ethylene-acrylic acid-ethyl acrylate copolymer, ethylene-vinyl acetate copolymer, ethylene-vinyl acetate-ethyl acrylate copolymer, ethylene-glycidyl methacrylate copolymer, ethylene-glycidyl methacrylate-ethyl acrylate copolymer and metal salts (ionomers) thereof and the like can be mentioned, which are used alone or two or more kinds thereof are used.

The amount of an olefin polymer having a carbonylic oxygen atom in a molecular skeleton is generally 10-60 % by weight, preferably 15-50 % by weight, more preferably 20-40 % by weight, relative to the whole weight of the polymer components constituting a substrate for adhesive tape. When the amount of an olefin polymer having a carbonylic oxygen atom in a molecular skeleton is smaller than this range, sufficient strength cannot be afforded, and when its amount is higher, sufficient resistance to thermal deformation at 100°C cannot be achieved.

As the polymer component other than the olefin polymer having a carbonylic oxygen atom in a molecular skeleton, a resin having a melting point of not less than 100°C is desirable to meet the resistance to thermal deformation. In the absence of a polymer having a melting point of at least 100°C in the entire polymer components, resistance to thermal deformation at 100°C cannot be achieved. As such polymer, a resin containing an olefin resin as a major component is desirable to achieve flexibility comparable to that of a PVC tape. For example, polyolefin resins comprising homopolymer such as polyethylene and polypropylene, polymer alloys containing an ethylene component and a propylene component and the like are preferable.

The constitution (form) of the polymer alloys containing an ethylene component and a propylene component is not particularly limited and, for example, various constitutions (forms) such as (1) polymer blends (physical mixtures) wherein two or more kinds of polymers are physically mixed, (2) block copolymers and graft copolymers wherein two or more kinds of polymers are bonded by a covalent bond, (3) IPN (Interpenetrating Polymer Network) structures wherein two or more kinds of polymers are entangled without bonding with each other by a covalent bond and the like are acceptable. In addition, the polymer alloy does not have to be necessarily uniform in composition (may have a distribution), and may be a polymer alloy wherein two or more kinds of polymers are compatibilized (compatible polymer alloy), or a polymer alloy wherein two or more kinds of polymers are incompatible to form a phase separation structure (incompatible polymer alloy).

The substrate for the adhesive tape of the present invention contains an inorganometallic compound surface-treated with a silane coupling agent. While the inorganometallic compound surface-treated with a silane coupling agent is not particularly limited, for example, known inorganometallic compounds such as diatomaceous earth, talc, clay, calcium silicate, zeolite, alumina, aluminum sulfate, barium sulfate, calcium sulfate, magnesium oxide, silica, mica, wollastonite, whisker, aluminum hydroxide, magnesium hydroxide, zirconium hydroxide, calcium hydroxide, barium hydroxide, calcium carbonate, basic magnesium carbonate, dolomite, hydrotalcite, borax and the like, which are surface treated with a silane coupling agent, can be mentioned. The inorganometallic compound surface treated with a silane coupling agent may be used alone or two or more kinds thereof are used in combination.

To enhance interface binding force with a polymer, a smaller particle size of the inorganometallic compound is advantageous. However, since a smaller particle size is associated with easy occurrence of coagulation of particles and degraded mechanical physical properties due to insufficient dispersion. Therefore, the particle size of inorganometallic compound is generally about 0.05-50 µm, preferably about 0.1-20 µm, more preferably about 0.5-10 µm. The particle size is an average particle size of secondary particles as measured by the laser diffraction method.

The silane coupling agent is a silane compound having a structure wherein an organic functional group having affinity or reactivity for an organic resin is chemically bonded to a hydrolyzable silyl group having affinity or reactivity for an inorganic material. As the hydrolyzable group of a silane coupling agent, alkoxy group, acetoxy group and the like can be mentioned. As the alkoxy group, methoxy group and ethoxy group are conventionally used. As the organic functional group, amino group, methacryl group, vinyl group, epoxy group, mercapto group and the like are conventionally used, and amino group is most superior in view of the effect of eliminating the yield point and achieving high strength.

Specific examples of amino silane coupling agent include γ-aminopropyltrimethoxysilane, γ-aminopropyltriethoxysilane, N-phenyl-γ-aminopropyltrimethoxysilane, N-β- (aminoethyl) -γ-aminopropyltrimethoxysilane, N-β-(aminoethyl)-γ-aminopropyltriethoxysilane, N-phenyl-γ-aminopropyltriethoxysilane and the like can be mentioned. One or more kinds of these may be used in combination.

The method for surface treatment of an inorganometallic compound with a silane coupling agent is not particularly limited and, a conventional method, such as dry treatment method, wet treatment method and the like can be employed. While the amount of a silane coupling agent attached to the surface of an inorganometallic compound varies depending on the kind of coupling agent, the kind of inorganometallic compound and specific surface area, it is generally 0.1-5.0 % by weight, preferably 0.3-3.0 % by weight, relative to an inorganometallic compound.

The amount of an inorganometallic compound surface-treated with a silane coupling agent is 10-200 parts by weight, preferably 20-150 parts by weight, more preferably 30-120 parts by weight, relative to 100 parts by weight of a polymer component constituting a substrate for adhesive tape. When it is smaller than 10 parts by weight, the effect of improving physical properties becomes small, and when it exceeds 200 parts by weight, the flexibility is degraded and the strength at break tends to decrease.

The substrate for the adhesive tape of the present invention further contains a salicylic acid compound. The addition of a salicylic acid compound can further increase strength at break, thereby improving the physical properties of the substrate for the adhesive tape of the present invention to reach the physical properties of a PVC tape. While the detail of the mechanism of high strength is unknown, the present inventors postulate that a salicylic acid compound adsorbed to the surface of an inorganometallic compound has some interaction with an olefin polymer having a carbonylic oxygen atom in a molecular skeleton and affords higher strength.

Since a salicylic acid compound adsorbs metallic ion impurity in an inorganometallic compound and enhances the effect of antioxidants (heavy metal inactivator), it simultaneously provides the effects of increasing the strength of an adhesive tape and prolonging the heat resistance. In the present invention, therefore, an olefin polymer having a carbonylic oxygen atom in a molecular skeleton, an inorganometallic compound surface-treated with a silane coupling agent and a salicylic acid compound are the essential constituting materials.

As the salicylic acid compound, a reaction product of salicylic acid and hydrazine can be mentioned. Specifically, N-salicylal-N'-salicyloylhydrazine, N,N'-bis(salicyloyl)hydrazine, 3-salicyloylamino-1,2,4-triazole, N,N'-bis(salicyloyl)oxalic acid dihydrazide, N,N'-bis(salicyloyl)oxalyldihydrazide, N,N'-bis(salicyloyl)thiopropionyldihydrazide, N,N'-bis(salicyloyl)dihydrazide, decamethylenedicarboxylic acid disalicyloylhydrazide and a mixture thereof and the like can be mentioned.

The amount of the salicylic acid compound to be added is 0.05-10.0 parts by weight, preferably 0.1-5.0 parts by weight, more preferably 0.2-2.0 parts by weight, relative to 100 parts by weight of a polymer component constituting a substrate for adhesive tape. When it is less than 0.05 parts by weight, the effect of enhancing the strength at break is void and the effect of prolonging the heat resistance is smaller. Addition in an amount exceeding 10.0 parts by weight does not provide an improving effect corresponding to the amount added, and the amount of bleeding on the surface of a substrate for adhesive tape increases, which may cause an adverse influence on other properties. In addition, contamination of the surface of a metal roll may occur during film forming process.

The substrate for the adhesive tape of the present invention may contain, as necessary, amine age resisters and antioxidants, quinoline age resisters and antioxidants, hydroquinone age resisters and antioxidants, phenol age resisters and antioxidants, phosphorus age resisters and antioxidants, phosphite age resisters and antioxidants, benzophenone UV absorbers, benzotriazole UV absorbers, hindered amine UV absorbers and the like, fatty acid amides (e.g., amides such as fatty acid monoamides, unsaturated fatty acid amides and the like; substituted amides, methylolamides), fatty acid ester amide, lubricants such as polyethylene wax etc., plasticizers and the like. These are kneaded with the essential constituting materials of a substrate for adhesive tape, i.e., an olefin polymer, an inorganometallic compound and a salicylic acid compound, and subjected to film forming as a mixture.

While the film forming method of a substrate for adhesive tape is not particularly limited, a method wherein the starting materials are mixed in a suitable mixing device such as Banbury mixer, press kneader, mixing roll, extruder and the like, and the mixture is formed into a film by a known film forming method such as compression-shaping, extrusion forming, calender molding, injection molding and the like can be mentioned. While the thickness of the substrate for adhesive tape varies depending on the use of an adhesive tape, it is generally 0.01-1 mm, preferably 0.05-0.5 mm.

While it is possible to apply a crosslinking treatment during the forming process by applying, after forming a film, ionizing radiation of the substrate for the adhesive tape of the present invention with electron beam, β-ray, γ-ray and the like, or adding a crosslinking agent such as organic peroxide etc. or a crosslinking auxiliary to a resin composition constituting a substrate for adhesive tape, one free of crosslinking treatment is preferable from the economical aspects.

The adhesive tape of the present invention is made by forming an adhesive layer on at least one surface of the aforementioned substrate for adhesive tape. As the adhesive for forming an adhesive layer, any existing adhesive such as rubber adhesives, hot melt adhesives, acrylic adhesives, emulsion adhesives and the like can be used. As the base polymer for rubber adhesives and hot melt adhesives, natural rubber, reclaimed rubber, silicone rubber, isoprene rubber, styrene butadiene rubber, polyisoprene, NBR, styrene-isoprene copolymer, styrene-isoprene-butadiene copolymer and the like are preferable.

As a tackifier to be used for an adhesive, for example, rosin tackifiers, terpene tackifiers, aliphatic petroleum hydrocarbon (C₅) tackifiers, aliphatic petroleum hydrocarbon (C₉) tackifiers, hydrogenated compounds and the like can be mentioned. The adhesive may contain additives such as oil, wax, antioxidant and the like, which are generally added thereto.

Of the above-mentioned adhesives, acrylic adhesive is preferable, and as the acrylic adhesive, a homopolymer of (meth)acrylate and a copolymer with a copolymerizable monomer can be mentioned. As the (meth)acrylate and copolymerizable monomer, alkyl (meth)acrylate (e.g., methyl ester, ethyl ester, butyl ester, 2-ethylhexyl ester, octyl ester etc.), glycidyl (meth)acrylate, (meth)acrylic acid, itaconic acid, maleic anhydride, (meth) acrylic amide, (meth)acrylic acid N-hydroxyamide, alkylaminoalkyl (meth)acrylate (e.g., dimethylaminoethyl methacrylate, t-butylaminoethyl methacrylate etc.), vinyl acetate, styrene, acrylonitrile and the like can be mentioned. Of these, as the main monomer, alkyl acrylate whose homopolymer generally has a glass transition temperature of not more than -50°C is preferable.

As an application method of an adhesive, conventionally known methods, such as cast method, roll coater method, reverse coater method, doctor blade method and the like can be employed. The thickness of the adhesive layer is generally about 10-50 µm, preferably about 15-40 µm.

### Examples

While the present invention is further explained in the following by referring to Examples, which are not to be construed as limitative.

The constituting materials used for Examples and Comparative Examples are shown in the following.
1) As "an olefin polymer having a carbonylic oxygen atom in a molecular skeleton" (hereinafter to be indicated as "component A"), the following materials were used for evaluation.
   A1: ethylene-vinyl acetate copolymer (EVA), melting point: 72°C [trade name: EVAFLEX EV 270, manufactured by DU PONT-MITSUI POLYCHEMICALS]
   A2: ethylene-ethyl acrylate copolymer (EEA), melting point: 79°C [trade name: EVAFLEX A-714, manufactured by DU PONT-MITSUI POLYCHEMICALS]
2) As the "olefin polymer other than component A" (hereinafter to be indicated as "component B"), the following materials were used for evaluation.
   B1: low density polyethylene (LDPE), melting point: 110°C [trade name: SUMIKATHENE G 201, manufactured by SUMITOMO CHEMICAL Co., Ltd.]
   B2: PP elastomer, melting point: 142°C [trade name: ADFREX Q100F, manufactured by SUNALLOMER LTD.]
3) As the inorganometallic compound (hereinafter to be indicated as "component C"), the following materials were used for evaluation.
   Since the influence of an inorganometallic compound on life of heat resistance is markedly high, the inorganometallic compounds used here were of the same kind of clay to clarify the effect on the life of heat resistance.
   C1: Sintered clay (average particle size 0.8 µm) subjected to surface treatment with vinyltriethoxysilane in an amount theoretically sufficient to cover the surface by 100% according to a wet method.
   C2: Sintered clay (average particle size 0.8 µm) subjected to surface treatment with γ-aminopropyltriethoxysilane in an amount theoretically sufficient to cover the surface by 100% according to a wet method.
   C3: Sintered clay without surface treatment (average particle size 0.8 µm)
4) As the salicylic acid compound (hereinafter to be indicated as "component D"), the following materials were used for evaluation.
   D1: 3-(N-salicyloyl)amino-1,2,4-triazole
   D2: decamethylenedicarboxylic acid disalicyloylhydrazide
5) As the antioxidant (hereinafter to be indicated as component E), the following materials were used for evaluation.

Since the influence of antioxidants on the life of heat resistance is markedly high, the same amount of the following materials was used.
E1: pentaerythritol tetrakis[3-(3,5-di-tert-butyl-4-hydroxyphenyl)propionate]
E2: tris(2,4-di-tert-butylphenyl)phosphite

As component A, component B, component C, component D and component E, the materials shown in the following Tables 1 and 2 were added in the amounts shown therein, and substrates for adhesive tape and adhesive tapes were manufactured by the following production method.

### [Production method of substrate for adhesive tape and adhesive tape]

Respective materials to be added shown in the following Tables 1 and 2 were kneaded in a pressure kneader press kneader to give a mixture. The mixture was formed with a calendering machine to give a 0.15 mm thick film as a substrate for adhesive tape. One surface of the substrate for adhesive tape was subjected to a corona discharge treatment and acrylic adhesive was applied (thickness 0.030 mm) to give adhesive tapes of Examples 1-5 and Comparative Examples 1-5.

**Table 1**

| Component | | Ex.1 | Ex.2 | Ex.3 | Ex.4 | Ex.5 |
|---|---|---|---|---|---|---|
| Component A | A-1 | 50 | - | 40 | 12 | 60 |
| | A-2 | - | 30 | - | - | - |
| Component B | B-1 | 50 | 70 | 60 | 88 | - |
| | B-2 | - | - | - | - | 40 |
| Component C | C-1 | - | 80 | - | 100 | - |
| | C-2 | 20 | - | 100 | - | 180 |
| | C-3 | - | - | - | - | - |
| Component D | D-1 | - | 5.0 | 1.0 | - | 9.0 |
| | D-2 | 0.3 | - | - | 1.0 | - |
| Component E | E-1 | 0.2 | 0.2 | 0.2 | 0.2 | 0.2 |
| | E-2 | 0.2 | 0.2 | 0.2 | 0.2 | 0.2 |

**Table 2**

| Component | | Com. Ex. 1 | Com. Ex. 2 | Com. Ex. 3 | Com. Ex. 4 | Com. Ex. 5 |
|---|---|---|---|---|---|---|
| Component A | A-1 | - | - | 40 | 4 | 80 |
| | A-2 | 40 | 30 | - | - | - |
| Component B | B-1 | 60 | 70 | 60 | 96 | - |
| | B-2 | - | - | - | - | 20 |
| Component C | C-1 | 220 | 80 | - | - | - |
| | C-2 | - | - | - | 32 | 90 |
| | C-3 | - | - | 50 | - | - |
| Component D | D-1 | - | - | - | - | 5.0 |
| | D-2 | 5.0 | - | 1.0 | 0.4 | - |
| Component E | E-1 | 0.2 | 0.2 | 0.2 | 0.2 | 0.2 |
| | E-2 | 0.2 | 0.2 | 0.2 | 0.2 | 0.2 |

### [Evaluation test]

Adhesive tapes obtained in Examples 1-5 and Comparative Examples 1-5 were cut in 19 mm, which is the standard width of PVC tape to give test samples which were subjected to various tests shown below. In Comparative Example 6, a commercially available PVC tape (trade name No. 21, manufactured by NITTO DENKO CORPORATION) was used for the test. The evaluation results are shown in Tables 3 and 4.

### (1) Tensile test

A test piece taken from an adhesive tape was stretched under an atmosphere of 23°C, 50% RH using a tensile tester (AG-20KNG, manufactured by SHIMADZU CORPORATION) at a distance between chucks 50 mm, tensile rate 300 mm/min, and initial elastic modulus, strength at break and elongation at break were measured. In addition, the presence or absence of the yield point was confirmed in the graph of the measurement output. The above-mentioned measurement was performed after preservation for at least 48 hr after manufacture of the adhesive tapes, under an atmosphere of 23°C, 50% RH.

### <Evaluation criteria>

initial elastic modulus: Those having 10-150 MPa passed,
yield point: Those that always showed increased strength relative to elongation passed.
strength at break: Those having 6-30 MPa passed.
elongation at break: Those showing 80-600% passed.

### (2) Heat deformation test

As shown in Fig. 1(a), adhesive tape T was wound around the outer circumference of a conductor round rod 1 having a diameter (d) of 2 mm to a thickness (t) equal to 0.8 mm to give a test form 10. The outer diameter (Do) of the test form 10 at a normal temperature was measured with a dial gauge defined in JIS B7503, a vernier calipers defined in JIS B7507 or a measurement tool having the measurement precision equivalent to those of the above, and the test form 10 was processed to make the total thickness thereof 3.6±0.5 mm. The test form 10 was placed in a tester heated to the predetermined temperature (100.0±1.0°C) and heated for 60 min. As shown in Fig. 1(b), the test form 10 was disposed between a pressurizing plate 2 with a retainer 2a (diameter 9.5±0.2 mm) and a parallel board 3 of the test device and pressurized by applying a predetermined weight (4.90 N) to the plane surface of the board from the perpendicular direction. Then, the test form was left standing at a predetermined temperature (100.0±1.0°C) for 60 min and the outer diameter (D₁) of the test form was measured as it was. The thickness (to) of the tape before heating, and the thickness (t₁) of the tape after heating were calculated from the following formula (I). From the following formula (II), a decrease rate (heat deformation rate) (X) was then calculated from the tape thickness before heating to that after heating.

### <Evaluation criteria>

Those showing a decrease rate (heat deformation rate) (X) within 65% passed, and those exceeding 65% failed.
t=(D-d)/2 (I)
wherein D is the outer diameter of the test form and d is a diameter of the round rod.
X(%)=((t₀-t₁)/t₀)×100 (II)
wherein to is the thickness (mm) before heating and t₁ is the thickness (mm) after heating.

### (3) Measurement of life of heat resistance

An adhesive tape test piece (150 mm) was taken, and the adhesive surface of the adhesive tape test piece was adhered to the release-treated surface of a polyester film after a release treatment. The test piece was hung in a gear oven without a load applied thereto, and the life of heat resistance was evaluated under the following conditions. The life of heat resistance of the test piece was determined when the elongation of the test piece became not more than 50%.
Temperature in the layer: 140°C
Air rate: 0.5 m/sec.
Exhaust dumper opening rate: 50%

**Table 3**

| Evaluation item | unit | Ex. 1 | Ex. 2 | Ex. 3 | Ex. 4 | Ex. 5 |
|---|---|---|---|---|---|---|
| initial elastic modulus | MPa | 40 | 56 | 61 | 90 | 95 |
| presence or absence of yield point | - | none | none | none | none | none |
| strength at break | MPa | 14.9 | 14.6 | 14.8 | 11.0 | 16.2 |
| elongation at break | % | 580 | 490 | 310 | 370 | 90 |
| heat deformation rate | % | 35 | 28 | 30 | 23 | 56 |
| life of heat resistance | h | 790 | 750 | 660 | 670 | 690 |
| evaluation | | OK | OK | OK | OK | OK |

**Table 4**

| Evaluation item | unit | Com. Ex.1 | Com. Ex.2 | Com. Ex.3 | Com. Ex.4 | Com. Ex.5 | Com. Ex.6 |
|---|---|---|---|---|---|---|---|
| initial elastic modulus | MPa | 163 | 55 | 52 | 78 | 43 | 38 |
| presence or absence of yield point | - | present | none | present | present | none | none |
| strength at break at | MPa | 10.0 | 13.1 | 12.6 | 14.8 | 15.7 | 17.3 |
| elongation at break | % | 50 | 640 | 840 | 790 | 240 | 250 |
| heat deformation rate | % | 26 | 28 | 24 | 19 | 100 | 48 |
| life of heat resistance | h | 630 | 470 | 770 | 790 | 730 | 680 |
| evaluation | | NG | NG | NG | NG | NG | OK |

In Comparative Example 1, component C was added in excess. It was confirmed that, when the amount of the inorganometallic compound was in excess, the physical properties of an adhesive tape could not be maintained even when the substrate comprises the essential components.

In Example 2 and Comparative Example 2, the variation in the effects depending on the presence or absence of a salicylic acid compound was examined. The addition of a salicylic acid compound resulted in improved strength at break by not less than 10% and smaller elongation at break, which established effectiveness on winding workability. Moreover, addition of a salicylic acid compound provided a heavy metal inactivation effect and it was confirmed that the life of heat resistance increased to about 1.5-fold.

In Comparative Example 3, an inorganometallic compound free of a surface treatment was added. It was confirmed that, when an inorganometallic compound was free of a surface treatment, a yield point was produced and elongation at break became very high, even when the other essential components (component A and component D) were contained in given amounts.

In Comparative Example 4, the amount of component A was decreased. It was confirmed that a yield point was produced and the elongation tended to increase.

In Comparative Example 5, the amount of component A was conversely increased. It was confirmed while all the physical properties necessary for winding performance were met, resistance to thermal deformation at 100°C was insufficient.

From the foregoing results, it was confirmed that, by adding given amounts of an olefin polymer having a carbonylic oxygen atom in a molecular skeleton, an inorganometallic compound surface-treated with a silane coupling agent and a salicylic acid compound, a flexible and highly strong adhesive tape having high heat resistance and hand-cuttability, which was suitable for winding operation, could be obtained.

## Claims

1. An adhesive tape comprising an adhesive layer on at least one surface of a substrate, wherein said substrate comprises at least an olefin polymer having a carbonylic oxygen atom in a molecular skeleton, an inorganometallic compound surface-treated with a silane coupling agent, and a salicylic acid compound, wherein
the content of said olefin polymer is 10-60 % by weight relative to the whole weight of the polymer components constituting the substrate,
the content of said inorganometallic compound surface-treated with a silane coupling agent is 10-200 parts by weight relative to 100 parts by weight of the polymer components constituting the substrate, and
the content of said salicylic acid compound is 0.05-10.0 parts by weight relative to 100 parts by weight of the polymer components constituting the substrate.

2. The adhesive tape of claim 1, wherein said substrate is free of a crosslinking treatment with ionizing radiation and/or a crosslinking agent.

3. The adhesive tape of claim 1 or 2, wherein the heat deformation rate of the adhesive tape at 100°C is not more than 65%.

4. A substrate for an adhesive tape, which comprises at least an olefin polymer having a carbonylic oxygen atom in a molecular skeleton, an inorganometallic compound surface-treated with a silane coupling agent, and a salicylic acid compound,
wherein
the content of said olefin polymer is 10-60 % by weight relative to the whole weight of the polymer components constituting the substrate,
the content of said inorganometallic compound surface-treated with a silane coupling agent is 10-200 parts by weight relative to 100 parts by weight of the polymer components constituting the substrate, and
the content of said salicylic acid compound is 0.05-10.0 parts by weight relative to 100 parts by weight of the polymer components constituting the substrate.

5. The substrate of claim 4, which is free of a crosslinking treatment with ionizing radiation and/or a crosslinking agent.

## Patentansprüche

1. Klebeband, das eine Klebstoffschicht auf wenigstens einer Oberfläche eines Substrats umfasst, wobei das Substrat wenigstens ein Olefinpolymer mit einem Carbonyl-Sauerstoffatom in einem Molekülgerüst, eine mit einem Silan-Kopplungsmittel oberflächenbehandelte metallanorganische Verbindung und eine Salicylsäureverbindung umfasst, wobei
der Gehalt des Olefinpolymers 10-60 Gew.-% beträgt, bezogen auf das Gesamtgewicht der Polymerkomponenten, die das Substrat bilden;
der Gehalt der mit einem Silan-Kopplungsmittel oberflächenbehandelten metallanorganischen Verbindung 10-200 Gewichtsteile beträgt, bezogen auf 100 Gewichtsteile der Polymerkomponenten, die das Substrat bilden; und
der Gehalt der Salicylsäureverbindung 0,05-10,0 Gewichtsteile beträgt, bezogen auf 100 Gewichtsteile der Polymerkomponenten, die das Substrat bilden.

2. Klebeband gemäß Anspruch 1, wobei das Substrat keine Vernetzungsbehandlung mit ionisierender Strahlung und/oder einem Vernetzungsmittel erhalten hat.

3. Klebeband gemäß Anspruch 1 oder 2, wobei die Warmverformungsrate des Klebebandes bei 100 °C nicht mehr als 65% beträgt.

4. Substrat für ein Klebeband, das wenigstens ein Olefinpolymer mit einem Carbonyl-Sauerstoffatom in einem Molekülgerüst, eine mit einem Silan-Kopplungsmittel oberflächenbehandelte metallanorganische Verbindung und eine Salicylsäureverbindung umfasst, wobei
der Gehalt des Olefinpolymers 10-60 Gew.-% beträgt, bezogen auf das Gesamtgewicht der Polymerkomponenten, die das Substrat bilden;
der Gehalt der mit einem Silan-Kopplungsmittel oberflächenbehandelten metallanorganischen Verbindung 10-200 Gewichtsteile beträgt, bezogen auf 100 Gewichtsteile der Polymerkomponenten, die das Substrat bilden, und
der Gehalt der Salicylsäureverbindung 0,05-10,0 Gewichtsteile beträgt, bezogen auf 100 Gewichtsteile der Polymerkomponenten, die das Substrat bilden.

5. Substrat gemäß Anspruch 4, das keine Vernetzungsbehandlung mit ionisierender Strahlung und/oder einem Vernetzungsmittel erhalten hat.

## Revendications

1. Ruban adhésif comprenant une couche adhésive sur au moins l'une des surfaces d'un substrat, ledit substrat comprenant au moins un polymère oléfinique comportant un atome d'oxygène carbonylique dans son squelette moléculaire, un composé inorganométallique dont la surface a été traitée par un agent de pontage silane et un composé d'acide salicylique,
dans lequel
la teneur en ledit polymère oléfinique représente de 10 à 60 % en poids du poids total des composants polymériques constituant le substrat,
la teneur en ledit composé inorganométallique dont la surface a été traitée par un agent de pontage silane représente de 10 à 200 parties en poids par rapport à 100 parties en poids des composants polymériques constituant le substrat, et
la teneur en ledit composé d'acide salicylique représente de 0,05 à 10 parties en poids par rapport à 100 parties en poids des composants polymériques constituant le substrat.

2. Ruban adhésif selon la revendication 1, dans lequel ledit substrat n'a pas subi de traitement de réticulation impliquant des radiations ionisantes et/ou un agent de réticulation.

3. Ruban adhésif selon la revendication 1 ou 2, dont le taux de déformation thermique à 100 °C ne dépasse pas 65 %.

4. Substrat pour ruban adhésif, comprenant au moins un polymère oléfinique comportant un atome d'oxygène carbonylique dans son squelette moléculaire, un composé inorganométallique dont la surface a été traitée par un agent de pontage silane et un composé d'acide salicylique,
dans lequel
la teneur en ledit polymère oléfinique représente de 10 à 60 % en poids du poids total des composants polymériques constituant le substrat,
la teneur en ledit composé inorganométallique dont la surface a été traitée par un agent de pontage silane représente de 10 à 200 parties en poids par rapport à 100 parties en poids des composants polymériques constituant le substrat, et
la teneur en ledit composé d'acide salicylique représente de 0,05 à 10,0 parties en poids par rapport à 100 parties en poids des composants polymériques constituant le substrat.

5. Substrat selon la revendication 4, n'ayant pas subi de traitement de réticulation impliquant des radiations ionisantes et/ou un agent de réticulation.
